# EUROPÄISCHE PATENTSCHRIFT

(11) **EP 3 099 548 B1**
(45) Veröffentlichungstag und Bekanntmachung des Hinweises auf die Patenterteilung: **11.10.2017**
(21) Anmeldenummer: 15703539.5
(22) Anmeldetag: 29.01.2015
(51) Int. Cl.: B60T 13/68, B01D 53/26, B60T 17/00

(54) **DRUCKLUFTVERSORGUNGSSYSTEM FÜR NUTZFAHRZEUGE**
COMPRESSED AIR SUPPLY SYSTEM FOR UTILITY VEHICLES
SYSTÈME D'ALIMENTATION EN AIR COMPRIMÉ DESTINÉ À DES VÉHICULES UTILITAIRES

(30) Priorität: 31.01.2014 DE 102014101180
(43) Veröffentlichungstag der Anmeldung: 07.12.2016
(73) Patentinhaber: KNORR-BREMSE Systeme für Nutzfahrzeuge GmbH, 80809 München (DE)
(72) Erfinder: SCHNITTGER, Karsten, 80935 München (DE); KRABOT, Matyas, H-2310 Szigetszentmiklós (HU)
(86) Internationale Anmeldenummer: PCT/EP2015/051800
(87) Internationale Veröffentlichungsnummer: WO 2015/114046

(56) Entgegenhaltungen:
- EP-A1- 1 479 584
- EP-A2- 1 527 974
- DE-A1- 10 342 978

## Beschreibung

Die Erfindung betrifft ein Druckluftversorgungssystem für Nutzfahrzeuge mit einer Druckluftaufbereitungseinheit zur Reinigung und Bereitstellung von Druckluft mit unterschiedlichen Druckniveaus für den Betrieb von mehreren Bremskreisen und/oder Hilfsdruckkreisen, wobei ein Druckbegrenzer zur Reduzierung des über einen Drucklufteingang zugeführten Eingangsdrucks eines ersten Druckniveaus A auf mindestens ein gewünschtes zweites Druckniveau B vorgesehen ist.

Das Einsatzgebiet der Erfindung erstreckt sich vornehmlich auf Nutzfahrzeuge, insbesondere mit Anhänger, welche mit einer pneumatischen Bremsanlage ausgestattet sind. Druckluftversorgungssysteme für Nutzfahrzeuge dienen neben einer Reinigung der seitens eines Kompressors erzeugten Druckluft insbesondere auch der Bereitstellung unterschiedlicher Druckniveaus, vornehmlich für das Bremssystem. Hierüber werden Druckluftbehälter mit Druckluft befüllt, um einen Druckvorrat für die verschiedenen Bremskreise zur Verfügung zu stellen. Bei einem Nutzfahrzeug mit zwei Bremskreisen für die Betriebsbremsanlage ist es erforderlich, für jeden dieser Bremskreise einen eigenen Druckluftbehälter vorzusehen. Im Allgemeinen ist darüber hinaus ein dritter Druckluftbehälter vorhanden, der einen Vorrat für eine Anhängerbremsanlage bereithält.

Die DE 103 42 978 A1 offenbart ein Druckluftversorgungssystem für Nutzfahrzeuge. Um eine Nachversorgung einer Anhängerbremsanlage ohne eigens hierfür vorgesehenen Druckluftbehälter zu ermöglichen, ist ein schaltbares Bypass-Ventil vorgesehen, so dass im Bedarfsfall über Rückschlagventile und das Bypass-Ventil Druckluft an den Vorratsbehältern für die Betriebsbremsanlage zur Anhängerbremsanlage überströmen kann. Zur Bereitstellung der verschiedenen Druckniveaus für die verschiedenen Bremskreise umfasst die Luftaufbereitungseinheit zwei Druckbegrenzer. Ohne Einfluss eines Druckbegrenzers wird auf einem ersten Druckniveau der höchste Druck zum Beispiel für die Betriebsbremskreise bereitgestellt. Ausgangsseitig eines ersten Druckbegrenzers wird ein zweites Druckniveau erzeugt, welches unter dem ersten Druckniveau liegt und Hilfsdruckkreise, beispielsweise eine Getriebesteuerung, versorgt. Mit dem zweiten Druckbegrenzer wird ausgehend vom höchsten Druck ein drittes Druckniveau erzeugt, welches unterhalb des zweiten Druckniveaus liegt, um den Anhängerbremskreis zu versorgen.

Nachteilhaft bei diesem Stand der Technik erweist sich der gerätetechnische Aufwand, der mit dem Einsatz von zwei Druckbegrenzern verbunden ist.

Es ist daher die Aufgabe der vorliegenden Erfindung, ein Druckluftversorgungssystem für Nutzfahrzeuge mit einer Luftaufbereitungseinheit zur Reinigung und Bereitstellung von Druckluft mit unterschiedlichen Druckniveaus dahingehend weiter zu verbessern, dass diese unterschiedlichen Druckniveaus mit einem geringen gerätetechnischen Aufwand realisiert werden können.

Die EP 1 527 974 A2 offenbart ein Druckluftversorgungssystem für Nutzfahrzeuge mit einer Luftaufbereitungseinheit zur Reinigung und Bereitstellung der Druckluft für den Betrieb von mehreren Bremskreisen.

Die Aufgabe wird ausgehend von einem Druckluftversorgungssystem gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass zur Reduzierung des Eingangsdrucks auf ein drittes Druckniveau C ein Differenzdruckelement mit definiertem Staudruck vorgesehen ist, das den Luftdruck des zweiten Druckniveaus B um einen das dritte Druckniveau C ergebenen Druckwert senkt. Das zweite Druckniveau B wird weiterhin - wie auch beim Stand der Technik - mit einem Druckbegrenzer erzeugt. Das erste Druckniveau A wird, ohne Nutzung eines Druckbegrenzers direkt durch den Druckregler der Druckluftversorgungseinrichtung erzeugt.

Somit spart die erfindungsgemäße Lösung zur Bereitstellung von drei unterschiedlichen Druckniveaus einen der bislang erforderlichen Druckbegrenzer ein, welcher durch ein im technischen Aufbau einfach zu realisierendes Differenzdruckelement ersetzt wird. Dabei wirkt das erfindungsgemäße Differenzdruckelement wie eine Art "Minus-Element", welches den Eingangsdruck stets um einen bestimmten Druckwert reduziert. Das höchste, erste Druckniveau A lässt sich durch die erfindungsgemäße Lösung mit dem einzigen Druckbegrenzer auf das zweite Druckniveau B herabsetzen; das zweite Druckniveau B wird dann durch das Differenzdruckelement reduziert, um das demgegenüber niedrigere dritte Druckniveau C zu erzeugen. Der Druckabfall am Differenzdruckelement entspricht insoweit der Differenz zwischen dem zweiten Druckniveau B und dem dritten Druckniveau C.

Der Vorteil der erfindungsgemäßen Lösung liegt insbesondere darin, dass ein Differenzdruckelement, welches vorzugsweise in der Bauform eines Rückschlagventils ausgeführt werden kann, dessen ein Ventilglied in der Schließstellung haltende Feder auf den Differenzdruck ausgelegt ist, einen einfacheren Aufbau hat und damit einen geringeren gerätetechnischen Aufwand darstellt. Im normalen Betrieb einer Druckluftaufbereitungseinheit können somit die drei Druckniveaus A bis C mit weniger Aufwand realisiert werden. Bei Druckluftversorgungssystemen, bei denen das dritte Druckniveau C für einen Anhängerbremskreis sowie eine Parkbremsversorgung vorgesehen ist, kann zudem eine Befiillreihenfolge der Vorratsbehälter erreicht werden, bei welcher der Vorratsbehälter des dritten Druckniveaus C sehr spät befüllt wird. Die anderen Kreise haben hierdurch immer einen zeitlichen Druckvorsprung, der dem Druckabfall an dem Differenzdruckelement entspricht.

Gemäß einer die Erfindung verbessernden Maßnahme wird vorgeschlagen, die Feder des vorzugsweise als Rückschlagventil ausgeführten Differenzdruckelements hinsichtlich der auf das Ventilglied wirkenden Federkraft einstellbar auszuführen, um den Differenzdruck zu ändern.

Bei einer bevorzugten Ausführungsform der Erfindung liefert der Druckbegrenzer des Druckluftversorgungssystems einen das zweite Druckniveau B entsprechende Luftdruck zwischen 8 bis 10 bar, vorzugsweise 9 bar. Hierdurch lässt sich beispielsweise eine Getriebesteuerung mit pneumatischer Energie versorgen. Das Differenzdruckelement führt gegenüber dem zweiten Druckniveau B eine Druckabfall, um 0,1 bis 2 bar vorzugsweise 0,5 bar aus, um beispielsweise ein Anhängerbremskreis mit pneumatischer Energie zu versorgen. Das erste Druckniveau A, welches von Druckreduzierungsmitteln unbeeinflusst bleibt, dient vornehmlich der Versorgung eines Betriebsbremskreises des Nutzfahrzeuges.

Weitere die Erfindung verbessernde Maßnahmen sind in den abhängigen Ansprüchen angegeben bzw. werden nachstehend gemeinsam mit der Beschreibung eines bevorzugten Ausführungsbeispiels der Erfindung anhand der Figuren näher dargestellt.

Es zeigt:
- Figur 1: einen pneumatischen Schaltplan einer Luftaufbereitungseinheit eines Druckluftversorgungssystems für ein Nutzfahrzeug, und
- Figur 2: einen schematischen Längsschnitt durch ein als Rückschlagventil ausgeführtes Differenzdruckelement.

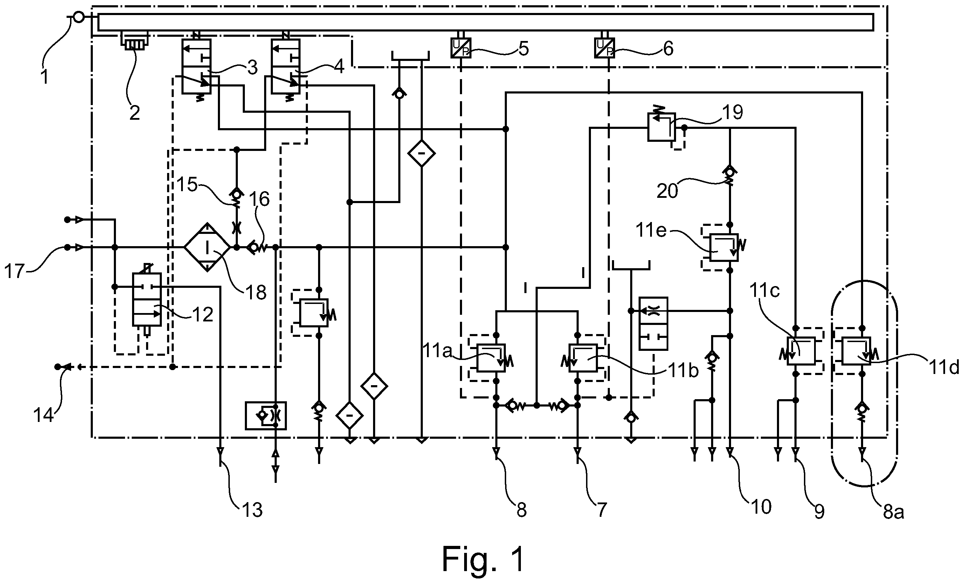

Gemäß Figur 1 ist die hier im Schaltplan dargestellte Luftbereitungseinheit eines Luftdruckversorgungssystems für ein Nutzfahrzeug über einen elektrischen Zentralstecker 1 für den elektrischen Anschluss versehen. Die vorliegenden Bauteile stehen hierüber mit einer - nicht weiter dargestellten - elektronischen Steuerung und zur elektrischen Versorgung in Verbindung: Eine Heizung 2, ein Magnetventil 3, ein Magnetventil 4 zur Regenerationssteuerung, ein Drucksensor 5 zur Messung des Drucks p₂₁ im Kreis 1 der Betriebsbremsanlage, ein Drucksensor 6 zur Messung des Drucks p₂₂ im Kreis 2 der Betriebsbremsanlage.

Als weitere pneumatische Anschlüsse ist je ein Druckluftausgang 7 und 8 für die Bereitstellung von Druckluft eines ersten Druckniveaus A von 12,5 bar zur Versorgung eines Betriebsbremskreises des Nutzfahrzeuges vorgesehen. Hierzu parallel geschaltet existiert ein weiterer auf dem Druckniveau A liegender Druckluftausgang 8a. Für die Bereitstellung von Druckluft eines zweiten Druckniveaus B in Höhe von 9 bar zur Versorgung einer Getriebesteuerung steht über den Druckluftausgang 9 zur Verfügung. Ferner existiert ein Druckluftausgang 10 für die Bereitstellung von Druckluft eines dritten Druckniveaus C in Höhe von 8,5 bar zur Versorgung eines Anhängerbremskreises des Nutzfahrzeuges. Den Druckluftausgängen 8 bis 10 ist jeweils ein Überströmventil 11a bis 11d vorgeschaltet. Ferner ist ausgangsseitig eines Ablassventils 12 ein Entlüftungsanschluss 13 sowie diverse weitere Anschlüsse vorgesehen. Die Luftaufbereitungseinheit verfügt weiterhin über einen Steueranschluss 14 für ein Energiesparsystem. Weitere Komponenten sind: Ein Regenerationsrückschlagventil 15 sowie weitere Rückschlagventile 16 etc., welche eine Rückströmung von Druckluft in Richtung des Drucklufteingangs 17 verhindern. Über den Drucklufteingang 17 wird der Luftaufbereitungsanlage von einem - nicht weiter dargestellten - Kompressor aus eine Druckluftspeisung vorgenommen.

Die zugeführte Druckluft wird über eine Luftfiltereinheit 18 getrocknet und gelangt auf dem ersten Druckniveau A in die Luftaufbereitungseinheit. Ein Druckbegrenzer 19 dient einer Reduzierung des über den Drucklufteingang 17 zugeführten Eingangsdrucks des ersten Druckniveaus A auf das zweite Druckniveau B. Zur Reduzierung des Eingangsdrucks auf das dritte Druckniveau C ist ein Differenzdruckelement 20 vorgesehen, das den Luftdruck des zweiten

Druckniveaus B, welcher ausgangsseitig des Druckbegrenzers 19 anliegt, um einen das dritte Druckniveau C ergebenen Druckwert senkt. Das Differenzdruckelement 20 ist als ein Rückschlagventil ausgebildet.

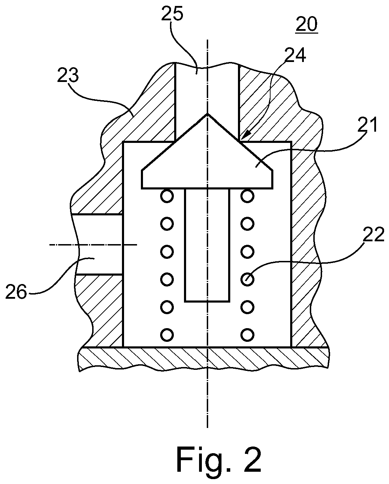

Nach Figur 2 besteht das Differenzdruckelement 20 aus einem ein Ventilglied 21 in der Schließstellung haltenden Feder 22, welche auf den Differenzdruck ausgelegt ist. Das Ventilglied 21 korrespondiert mit einem seitens eines Ventilgehäuses 23 ausgebildeten Ventilsitz 24. Am Ventilgehäuse 23 ist ein Eingangsanschluss 25 sowie ein Ausgangsanschluss 26 ausgebildet, um das Differenzdruckelement 20 in den pneumatischen Schaltplan gemäß Figur 1 in der dort dargestellten Wirkrichtung einzubinden.

### Bezugszeichenliste

- 1: Zentralstecker
- 2: Heizung
- 3: Magnetventil
- 4: Magnetventil
- 5: Drucksensor
- 6: Drucksensor
- 7: Nebenverbraucheranschluss
- 8: erster Druckluftausgang
- 9: zweiter Druckluftausgang 10 dritter Druckluftausgang
- 11: Überströmventil
- 12: Ablassventil
- 13: Entlüftungsanschluss
- 14: Steueranschluss
- 15: Rückschlagventil
- 16: Rückschlagventil
- 17: Drucklufteingang
- 18: Luftfiltereinheit
- 19: Druckbegrenzer
- 20: Differenzdruckelement
- 21: Ventilglied
- 22: Feder
- 23: Ventilgehäuse
- 24: Ventilsitz
- 25: Eingangsanschluss
- 26: Ausgangsanschluss

## Patentansprüche

1. Druckluftversorgungssystem für Nutzfahrzeuge mit einer Luftaufbereitungseinheit zur Reinigung und Bereitstellung von Druckluft mit unterschiedlichem Druckniveau für den Betrieb von mehreren Bremskreisen und/oder Hilfsdruckkreisen, wobei ein Druckbegrenzer (19) zur Reduzierung des über einen Drucklufteingang (17) zugeführten Eingangsdrucks eines ersten Druckniveaus A auf ein gewünschtes zweites Druckniveau B vorgesehen ist,
**dadurch gekennzeichnet, dass** zur Reduzierung des Eingangsdrucks auf ein drittes Druckniveau C ein Differenzdruckelement (20) mit definiertem Staudruck vorgesehen ist, das den Luftdruck des zweiten Druckniveaus B um einen das dritte Druckniveau C ergebenden Druckwert senkt.

2. Druckluftversorgungssystem nach Anspruch 1,
**dadurch gekennzeichnet, dass** das Differenzdruckelement (20) als ein Rückschlagventil ausgeführt ist, dessen ein Ventilglied (21) in der Schließstellung haltende Feder (22) auf den Differenzdruck ausgelegt ist.

3. Druckluftversorgungssystem nach Anspruch 2,
**dadurch gekennzeichnet, dass** die Feder (22) hinsichtlich der auf das Ventilglied wirkenden Federkraft einstellbar ausgeführt ist, um den Differenzdruck zu ändern.

4. Druckluftversorgungssystem nach Anspruch 1,
**dadurch gekennzeichnet, dass** das erste Druckniveau A höher als das zweite Druckniveau B ist, welches wiederum höher als das dritte Druckniveau C ist.

5. Druckluftversorgungssystem nach Anspruch 1,
**dadurch gekennzeichnet, dass** der Druckbegrenzer (19) einen das zweite Druckniveau B entsprechenden Luftdruck zwischen 8 bis 10 bar, vorzugsweise 9 bar, liefert.

6. Druckluftversorgungssystem nach Anspruch 1,
**dadurch gekennzeichnet, dass** das Differenzdruckelement (20) einen Druckabfall des zweiten Druckniveaus B um 0,1 bis 2 bar, vorzugsweise 0,5 bar, vornimmt, um das dem gegenüber niedrigere dritte Druckniveau C zu erzeugen.

7. Druckluftversorgungssystem nach Anspruch 1,
**dadurch gekennzeichnet, dass** mindestens ein erster Druckluftausgang (7; 8) für die Bereitstellung von Druckluft des ersten Druckniveaus A zur Versorgung eines Betriebsbremskreises des Nutzfahrzeuges vorgesehen ist.

8. Druckluftversorgungssystem nach Anspruch 1,
**dadurch gekennzeichnet, dass** ein zweiter Druckluftausgang (9) für die Bereitstellung von Druckluft des zweiten Druckniveaus B zur Versorgung einer Getriebesteuerung des Nutzfahrzeuges vorgesehen ist.

9. Druckluftversorgungssystem nach Anspruch 1,
**dadurch gekennzeichnet, dass** ein dritter Druckluftausgang (10) für die Bereitstellung von Druckluft des dritten Druckniveaus C zur Versorgung eines Anhängerbremskreises des Nutzfahrzeuges vorgesehen ist.

10. Druckluftversorgungssystem nach Anspruch 1,
**dadurch gekennzeichnet, dass** dem ersten bis dritten Druckluftausgang (8-10) je ein Überströmventil (11a-11d) vorgeschaltet ist.

## Claims

1. Compressed-air supply system for utility vehicles having an air-preparation unit for purifying and supplying compressed air at different pressure levels for the operation of a plurality of brake circuits and/or auxiliary pressure circuits, wherein a pressure limiter (19) is provided for reducing the inlet pressure, supplied via a compressed-air inlet (17), having a first pressure level A, to a desired second pressure level B, **characterised in that** for the purpose of reducing the inlet pressure to a third pressure level C a differential pressure element (20) with defined back pressure is provided, which lowers the air pressure of the second pressure level B by a pressure value resulting in the third pressure level C.

2. Compressed-air supply system according to claim 1,
**characterised in that** the differential pressure element (20) is constructed as a non-return valve, the spring (22) of which, holding a valve member (21) in the closed position, is designed for the differential pressure.

3. Compressed-air supply system according to claim 2,
**characterised in that** the spring (22) is constructed to be adjustable as regards the spring force acting on the valve member, in order to alter the differential pressure.

4. Compressed-air supply system according to claim 1,
**characterised in that** the first pressure level A is higher than the second pressure level B, which in turn is higher than the third pressure level C.

5. Compressed-air supply system according to claim 1,
**characterised in that** the pressure limiter (19) supplies an air pressure, corresponding to the second pressure level B, between 8 bar to 10 bar, preferably 9 bar.

6. Compressed-air supply system according to claim 1,
**characterised in that** the differential pressure element (20) carries out a drop in pressure of the second pressure level B by 0.1 bar to 2 bar, preferably 0.5 bar, in order to generate the, in comparison therewith, lower third pressure level C.

7. Compressed-air supply system according to claim 1,
**characterised in that** at least one first compressed-air outlet (7; 8) for the provision of compressed air having the first pressure level A is provided for supplying a service-brake circuit of the utility vehicle.

8. Compressed-air supply system according to claim 1,
**characterised in that** a second compressed-air outlet (9) is provided for the provision of compressed air having the second pressure level B for supplying a transmission control unit of the utility vehicle.

9. Compressed-air supply system according to claim 1,
**characterised in that** a third compressed-air outlet (10) is provided for the provision of compressed air having the third pressure level C for supplying a trailer brake circuit of the utility vehicle.

10. Compressed-air supply system according to claim 1,
**characterised in that** an overflow valve (11a-11d) is connected upstream of each of the first to third compressed-air outlets (8-10).

## Revendications

1. Système d'alimentation en air comprimé pour un véhicule utilitaire comportant un dispositif de traitement de l'air pour épurer et mettre à disposition de l'air comprimé à un niveau de pression variable pour le fonctionnement de plusieurs circuits de freinage et/ou de circuits de pression auxiliaire, un limiteur (19) de pression étant prévu pour réduire la pression d'entrée apportée par une entrée (17) d'air comprimé d'un premier niveau A de pression à un deuxième niveau B de pression souhaité,
**caractérisé en ce qu'**il est prévu, pour réduire la pression d'entrée à un troisième niveau C de pression, un élément (20) de pression différentielle ayant une pression dynamique définie, qui abaisse la pression d'air du deuxième niveau B de pression à une valeur de pression donnant le troisième niveau C de pression.

2. Système d'alimentation en air comprimé suivant la revendication 1,
**caractérisé en ce que** l'élément (20) de pression différentielle est réalisé sous la forme d'un clapet anti-retour, dont un élément (21) de clapet est conçu sur la pression différentielle comme un ressort (22) maintenant dans la position de fermeture.

3. Système d'alimentation en air comprimé suivant la revendication 2,
**caractérisé en ce que** le ressort (22) est réalisé de manière à pouvoir être réglé en ce qui concerne la force de ressort agissant sur l'élément de clapet, afin de modifier la pression différentielle.

4. Système d'alimentation en air comprimé suivant la revendication 1,
**caractérisé en ce que** le premier niveau A de pression est supérieur au deuxième niveau B de pression, lequel à son tour est supérieur au troisième niveau (C) de pression.

5. Système d'alimentation en air comprimé suivant la revendication 1,
**caractérisé en ce que** le limiteur (19) de pression délivre une pression d'air correspondant au deuxième niveau B de pression comprise entre 8 et 10 bar, de préférence égale à 9 bar.

6. Système d'alimentation en air comprimé suivant la revendication 1,
**caractérisé en ce que** l'élément (20) de pression différentielle produit une chute de pression du deuxième niveau B de pression de 0,1 à 2 bar, de préférence de 0,5 bar, afin de produire le troisième niveau C de pression comparativement plus bas.

7. Système d'alimentation en air comprimé suivant la revendication 1,
**caractérisé en ce qu'**il est prévu au moins une première sortie (7, 8) d'air comprimé pour la mise à disposition d'air comprimé du premier niveau A de pression pour alimenter un circuit de freinage du véhicule utilitaire.

8. Système d'alimentation en air comprimé suivant la revendication 1,
**caractérisé en ce qu'**il est prévu une deuxième sortie (9) d'air comprimé pour la mise à disposition d'air comprimé du deuxième niveau B de pression pour alimenter une commande de transmission du véhicule utilitaire.

9. Système d'alimentation en air comprimé suivant la revendication 1,
**caractérisé en ce qu'**il est prévu une troisième sortie (10) d'air comprimé pour la mise à disposition d'air comprimé du troisième niveau C de pression est prévue pour alimenter un circuit de freinage de remorque du véhicule utilitaire.

10. Système d'alimentation en air comprimé suivant la revendication 1,
**caractérisé en ce que** respectivement une soupape (11a à 11d) de surpression est montée en aval des première à troisième sorties (8 à 10) d'air comprimé.
